# EUROPEAN PATENT SPECIFICATION

(11) **EP 4 312 388 B1**
(45) Date of publication and mention of the grant of the patent: **02.12.2026**
(21) Application number: 22461583.1
(22) Date of filing: 26.07.2022
(51) Int. Cl.: H04B 7/15, H04L 67/04

(54) **A METHOD OF TRANSMITTING DATA, A RELAY AND END-DEVICE**
VERFAHREN ZUR DATENÜBERTRAGUNG, RELAIS UND ENDGERÄTEVORRICHTUNG
PROCÉDÉ DE TRANSMISSION DE DONNÉES, RELAIS ET DISPOSITIF D'EXTRÉMITÉ

(43) Date of publication of application: 31.01.2024
(73) Proprietor: AIUT SPOLKA AKCYJNA, 44-109 Gliwice (PL); Instytut Informatyki Teoretycznej i Stosowanej PAN, 44-100 Gliwice (PL)
(72) Inventor: Grochla, Krzysztof, Gliwice (PL); Frankiewicz, Artur, Gliwice (PL); Laskarzewski, Zbigniew, Gliwice (PL)
(74) Representative: Bury & Bury

(56) References cited:
- US-A1- 2020 107 402
- US-A1- 2020 127 873
- BERTOLAUD ET AL: "LoRaWAN L2 1.0.4 Specification 2020 LoRa Alliance CONNECTION WITH THIS DOCUMENT OR THE INFORMATION CONTAINED HEREIN, 30 EVEN IF ADVISED OF THE POSSIBILITY OF SUCH LOSS OR DAMAGE", 28 October 2020 (2020-10-28), XP093006028, Retrieved from the Internet <URL:https://resources.lora-alliance.org/technical-specifications/ts001-1-0-4-lorawan-l2-1-0-4-specification> [retrieved on 20221208]

## Description

### Field of the invention

The invention concerns a method of transmitting data, a relay and end-device in LoRaWAN radio network, as well as computer program product for transmitting data and computer program product for relaying transmission.

### State of the art

The Low Power Wide Area Network (LPWAN) is a set of novel wireless communication technologies, providing large coverage areas, low bandwidth, small data rates and used to transmit limited data sizes, but providing very low energy usage and long battery life operation.

The LoRa (Long Range) is a proprietary low-power wide-area network modulation technique and one of the most commonly used LP WAN technologies, using license-free sub-gigahertz radio frequency bands. It is described in the LoRaWAN Link Layer Specification v1.0.4. It uses a spread spectrum modulation based on the chirp spread spectrum (CSS) modulation. LoRa is used for maintaining connectivity with a battery operated device over a distance of a few kilometres for a long time without recharge - even up to ten years.

LoRaWAN networks are typically laid out in a star-of-stars topology in which gateways relay transmissions between end-devices and a central LoRaWAN Network Server at the backend. Gateways are connected to a LoRaWAN Network Server via standard IP connections, whereas end-devices use single-hop (direct) radio-frequency (RF) communication to one or many gateways. All communication is generally bidirectional, although uplink communication from an end-device to a LoRaWAN Network Server is expected to be the predominant traffic. End-devices in LoRaWAN typically have processing unit and memory and are programmable.

Communication between end-devices and gateways is distributed over different frequency channels and data rates. Selecting the data rate is a tradeoff between communication range and transmission duration; communications with different LoRa data rates do not interfere with each other. To maximize both the battery life of end-devices and the overall network capacity, the LoRaWAN network infrastructure may manage the data rate and RF transmit power for each end-device individually by means of an adaptive data rate (ADR) scheme. LoRaWAN defines classes A-C of end-devices. Class A operation is the lowest-power end-device system for applications that require only downlink communication from the server shortly after the end-device has sent an uplink transmission. Downlink communications from the server at any other time will have to wait until the next uplink initiated by the end-device. It is known that end-devices in LoRaWAN can be easily used to relay transmission of data from other end-devices. It is not often used though as it causes incomparably higher energy consumption and shorter battery life.

To avoid interferences LoRa requires class A end-device to communication at random times and random frequency channels to limit risk of interferences and reduce peak to average power ratio in the system.

The LoRaWAN protocol, defines the transmission frames and MAC layer for LoRa networks. The LoRa modulation is used together with the LoRaWAN protocol defining the packet format and a star-of-stars topology forms a network in which gateways exchange messages with end devices and forward them to a central LoRaWAN Network Server. LoRa typically is applied in unlicensed radio spectrum. Generally multiple transmission channels are used, but the number of channels available is fairly limited.

Commonly known problem with LoRa WAN networks is temporal or permanent interruption in transmission due to change of propagation environment due to change of season, growth of plants, reconfiguration of buildings and vehicles or other reasons causing fading. Reconfiguration of network and relocation or addition of gateways is highly inconvenient as the fading often is temporal and any change addressing problem with one end-device may easily cause problems with other. US2020107402A1 discusses current cellular radio access technologies that lack capabilities for both long range and low power usage devices. Public LPWAN networks are described therein that may use multiple network servers. Mobile networks track the location of UEs, and therefore the mobile networks may be suited for determining locations, storing location information, and providing location information to third parties.

During the network deployment, some end devices may be located in blind spots, which have a limited connectivity.

Some of the LoRa devices deployed may have no direct communication with the gateways due to the obstacles blocking radio signal propagation.

The LoRa Alliance is working on the relay mode operation allowing to extend the range of the gateways thanks to devices acting as relays, forwarding messages between the gateways and other end nodes. Such approach was disclosed in CN112423365 in which battery powered master-nodes were used as battery powered relays for forwarding transmission, or in CN106792916.

Such operation is energy demanding as class A end-devices need to transmit at random times and in random channels. Therefore relay devices must keep their receivers constantly on or at least keep them on for large fraction of time. That means that relay cannot be a battery powered device or if it is it cannot guarantee required long battery life. Problem to be solved is to meet requirements of class A LoRaWAN devices to guarantee low interferences and simultaneously keep low battery consumption in both relay devices. An attempt to circumvent this problem is disclosed in US2020127873. US2020127873 discloses an LPWAN communication system which includes server equipment, at least one gateway and at least one relay. Each gateway communicates with terminals using a Class A communication mode. Any response intended for a terminal uses a reception window defined with respect to a transmission time of an original message by said terminal. New communication class A' not according to LoRaWAN is proposed. Class A' does not meet requirement of random transmission time. Class A' communication mode is defined as follows: the relay transmits beacons at regular intervals and listens out to terminals only during timeslots defined with respect to said beacons. In this Class A' communication mode, the relay propagates any response toward a terminal using at least one other reception window defined with respect to a transmission time of an original message by said terminal. Each relay is seen as a terminal by each gateway, and communicates with terminals in accordance with a Class A'.

### Summary of the invention

The aforementioned problem is solved by a method of transmitting data in LoRaWAN radio network according to the invention. The method is used in a LoRaWAN radio network having a LoRaWAN Network Server, at least one gateway at least one relay and at least one end-device. The method comprises a step of activation of the at least one end-device, a step of activation of the at least one relay, and a step of transmitting at least one data frame from the end-device, to the LoRaWAN Network Server, via the relay and the gateway. The at least one relay is battery powered. Prior to the step of transmitting the at least one data frame via the relay the method comprises: a step of storing location information of the at least one end-device is executed by the LoRaWAN Network Server, a step of storing location information of the at least one relay is executed by the LoRaWAN Network Server, a step of detecting loss of communication by the at least one end-device by expiration of a wait time for a response or by a maximal number of unsuccessful attempts, a step of detecting loss of communication by the LoRaWAN Network Server when communication from the at least one end-device is not received within a time window that follows a transmission time assigned to the end-device, and then a step of designating the relay for relaying communication with the at least one end-device by the LoRaWAN Network Server based on the location information of the end-device and the relay. The LoRaWAN Network Server sends a relay designation frame comprising a fixed parameter unique for the end-device to the relay. The step of transmitting the at least one data frame from the end-device to the LoRaWAN Network Server via the relay and the gateway comprises: a step of transmitting a data frame by the end-device to the relay at frequency channels and at predetermined times with an offset selected with a pseudo random function fed with the fixed parameter unique for the end-device and at least one variable parameter common for both the end-device and the relay. The variable parameter is a time-related value determined by both the relay and the end- device. The method further comprises a step of receiving the data frame by the relay listening in a predefined time window at the frequency channels and at the predetermined times with the offset selected with the pseudo random function fed with the fixed parameter unique for the end-device and the variable parameter common for both the end-device and the relay, and a step of sending the data frame by the relay to the LoRaWAN Network Server via the gateway. Use of pseudorandom transmission reduces risk of hazards between the devices and PAPR of the noise in the network. Furthermore it contributes to uniform use of bandwidth and access time to medium. Location information allows selection of relay that can guarantee stable transmission. Location information is useful for predicting seasonal communication losses in reach propagation scattering environment - caused by daily events such as parking cars or seasonal.

Advantageously, the loss of communication is detected when activation of the end-device is unsuccessful.

Advantageously, the loss of communication is detected when transmission of data from the end-device is not received and/or not acknowledged.

Advantageously, a frequency channel for relayed communication is selected with the pseudo random function fed with the fixed parameter unique for the end-device and the variable parameter common for both the end-device and the relay.

Advantageously the channel is selected from a poll of at least three channels dedicated for relaying. Use of separate channels minimizes interferences with regular transmission.

Advantageously, the frequency channel is selected from a poll of at least eight channels dedicated for a conventional communication in the LoRaWAN network. Use of channels for conventional transmission is still compatible with standard and enables convenient use of end-devices as relays.

Other numbers of channels applicable in various implementations are also allowable.

Advantageously, the pseudo random function is a Mersenne Twister function.

The relay for relaying communication with the end-device is advantageously designated by the LoRaWAN Network Server based on the location information of the end-device and the relay and/or the gateway. Use of location information of gateway vs. relay enables managing risk of loss of communication between gateway and relay.

Advantageously, the relay is pre-designated for relaying communication with the specific end-device upon its installation. In such scenario it is determined on LoRaWAN Network Server that location of the pre-designated relay is suitable for relaying transmission from particular end-device. It is particularly convenient if loss of transmission is predictable - e.g. seasonal caused by growth of leaves on plants or snow in the propagation environment. Also predetermined relay can be placed in optimal location selected with measurements or electromagnetic simulations.

A relay for transmitting data in a LoRaWAN radio network having a LoRaWAN Network Server, at least one Gateway, and at least one end-device, according to the invention is configured to: receive a Relay Designation frame comprising a fixed parameter unique for the end-device from the LoRaWAN Network Server, receive a Relay Join Request from the end-device, and communicate with the end-device at frequency channels and predetermined times with offsets selected with a pseudo random function fed with the fixed parameter unique for the end-device and a variable parameter common for both the end-device and the relay wherein the variable parameter is a time-related value determined by both the relay and the end- device, in response to being designated by the LoRaWAN Network Server based on the location information of the end-device and the relay, for relaying communication with the at least one end-device via the gateway. Use of location information of gateway vs. relay enables managing risk of loss of communication between gateway and relay.

A computer program product for relaying transmission with a relay or end-device in a LoRaWAN radio network having a LoRaWAN Network Server, at least one Gateway, and at least one end-device, according to the invention comprises a set of instructions that when run by the relay or end-device cause it to receive a Relay Designation frame comprising a fixed parameter unique for the end-device from the LoRaWAN Network Server, receive a Relay Join Request from the end-device, compute predetermined times with offsets selected with a pseudo random function fed with the fixed parameter unique for the end-device and one variable parameter common for both end-device and relay, wherein the variable parameter is a time-related value determined by both the relay and the end- device, communicate with end-device at predetermined times with offsets and at frequency channels and via the gateway, in response to being designated by the LoRaWAN Network Server based on the location information of the end-device and the relay. Advantageously the computer program product comprises instructions that cause relay to executed other mentioned above steps of the method of transmission data according to the invention.

An end-device for a LoRaWAN radio network having a LoRaWAN Network Server, at least one Gateway, and at least one relay, according to the invention is configured to: detect loss of communication by expiration of a wait time for a response or by a maximal number of unsuccessful attempts, send a relay Join Request, and communicate via a relay designated by the LoRaWAN Network Server based on the location information of the end-device and the relay, for relaying communication with the end-device to the LoRaWAN Network Server via the gateway, at frequency channels and predetermined times with offsets selected with a pseudo random function fed with one fixed parameter unique for the end-device and one variable parameter common for both the end-device and the relay, wherein the variable parameter is a time-related value determined by both the relay and the end-device. Detection of loss of transmission can be implemented in various ways. It should be adapted to avoid unnecessary relaying in incidental interruptions, where mere retransmission helps but ensure detection of permanent loss of communication. The relay needs to be able to receive the Relay Join Request.

A computer program product for transmitting data from an end-device or relay in a LoRaWAN radio network having a LoRaWAN Network Server, at least one Gateway, and at least one relay, according to the invention comprises a set of instructions that when run by the end-device cause it to: detect loss of communication by expiration of a wait time for a response or by a maximal number of unsuccessful attempts, send a relay Join Request, and communicate via a relay designated by the LoRaWAN Network Server based on the location information of the end-device and the relay, for relaying communication with the end-device to the LoRaWAN Network Server via the gateway, at frequency channels and predetermined times with offsets selected with a pseudo random function fed with one fixed parameter unique for the end-device and one variable parameter common for both the end-device and the relay (**R1**), wherein the variable parameter is a time-related value determined by both the relay (**R1**) and the end-device (**ED1**).

### Description of drawings

The invention has been described below in detail, with reference to the attached figures.
Fig. 1 shows a simplified block diagram of LoRaWan system according to the invention.
Fig. 2 shows an exemplary sequence of communications sent in LoRaWan system according to the invention, in which Join-Request Acknowledge frame was dropped.
Fig. 3 shows an exemplary sequence of communications sent in LoRaWan system according to the invention, in which data frame from end-point device was dropped.
Fig. 4 shows an exemplary sequence of communications sent in LoRaWan system according to the invention, in which data frame from end-point device was dropped early before transmission window.

### Description of embodiments of the invention

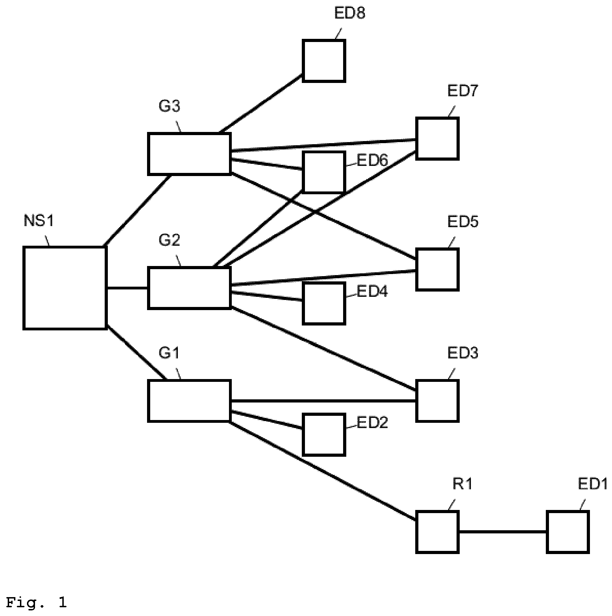

A block diagram of LoRaWAN network is shown in Fig. 1. The network has LoRaWAN Network Server **NS1** communicating with gateways **G1, G2, G3.** Gateways communicate with class A end-devices **ED2, ED3, ED4, ED5, ED6, ED7, ED7, ED8.** Additionally one class A end-device **ED1** communicates via relay **R1** configured according to the invention.

LoRaWAN Network Server **NS1** comprises a Lora LoRaWAN Network Server governing transmission and Head-End System (so called HES) server being an Application Server governing configuration of the devices in a data layer.

Relay **R1** is a battery powered end-device running a computer program product according to the invention. Before relay **R1** can work as a middle device within the communication it needs to be registered in a network. It is done by sending a frame: join request **201R** from relay **R1** to gateway **G1**. Request is accepted with return frame: Join Response **201A.**

Conventionally transmission between LoRaWAN Network Server **NS1** and end-device **ED1, ED2, ED3, ED4, ED5, ED6, ED7, ED8** is realized via one or more gateways **G1, G2, G3.** Gateways **G1, G2, G3** are connected to power supplies and configured to continuously monitor 8 channels available for end-devices, **ED2, ED3, ED4, ED5, ED6, ED7, ED8.** Network coverage is limited by available locations for gateways **G1, G2, G3** placement. Gateways require external power supply, usually from power network. Eight channels are given only as a way of example - the number of available channels depends on legal regulations in different jurisdictions.

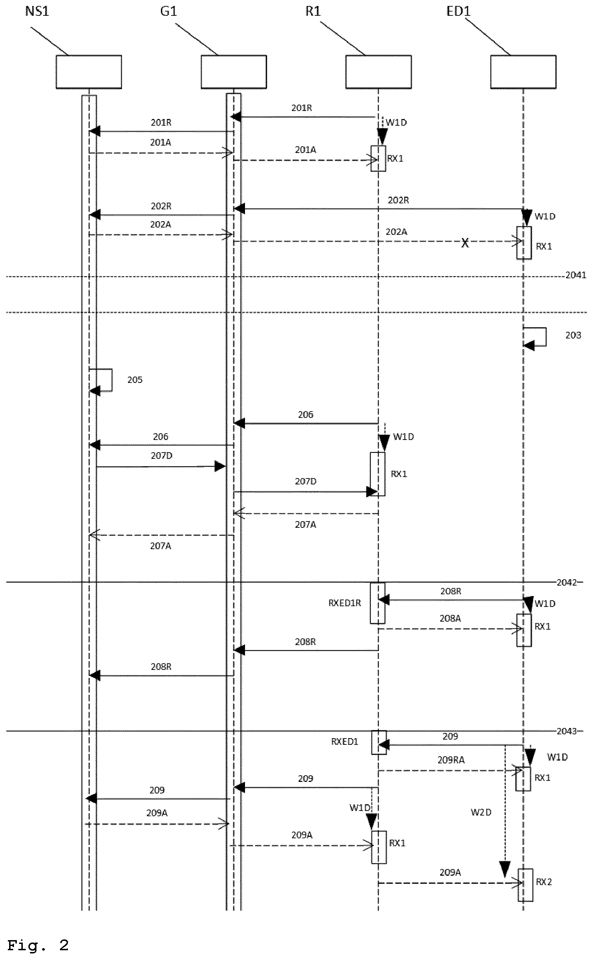

Communication with end-device **ED1** being outside of coverage of all gateways **G1, G2, G3,** is shown schematically in Fig. 2. Consecutive frames sent between LoRaWAN Network Server **NS1,** gateway **G1,** relay **R1** and end-device **ED1** are marked with arrows. Frames initiating communication are depicted with solid lines and responses with dotted lines. Lower arrows represent later signals. Vertical dashed lines originating from the LoRaWAN Network Server **NS1,** gateway **G1,** relay **R1** and end-device **ED1** represent sources and destination of frames. Vertical downward arrows **W1D, W2D** represent delays between sending uplink communication and turning receiver on. Vertical rectangles **RX, RX1, RX2** represent time windows in with particular devices have receiver turned on.

**RX1** window is opened after delay **WD1** every time end-device **ED1** or relay **R1** transmits data to gateway **G1.** Thus downlink confirmation, acknowledgement and response messages or downlink data or data acknowledgement from **G** to **ED1** or **R1** is sent. **RX1** window is also opened when **ED1** transmits to **R1.**

The predefined reception Window Delay **W1D** allows the LoRaWAN Network Server **NS1** to receive and process data. Reception Window Delay **W1D** results in end-device **ED1** and relay **R1** conserving energy by keeping receiver off while data is being received and processed by the LoRaWAN Network Server **NS1.**

Every time the LoRaWAN Network Server **NS1** needs to send any data to end-device or relay, it waits for **RX1** window obeying **W1D** timing. It applies also to Relay Designation frame. Each time window **RX1** is closed after receiving correct response to last transmitted radio frame.

**RX2** represents second type of reception window which is opened every time end-device **ED1** transmits data to gateway **G1** and is awaiting response from LoRaWAN Network Server **NS1.** Second reception window **RX2** is opened after the second reception window delay **W2D** to allow relayed frame to be received by the relay **R1,** transmitted to the LoRaWAN Network Server **NS1,** then processed by **NS1** and transmitted to **R1.**

Upon addition of new end-device **ED1** to the network, a serial number of the end-device **ED1** and its location information are stored in the LoRaWAN Network Server **NS1.** The location information may be specifically global or local coordinates, name of the facility/object where the device is located or specification of the gateways that are potentially within a radio communication range.

Although geographical coordinates are very convenient location information, location information can be also represented in more coarse manner e.g. by name of the nearby object or relative position with respect to the nearest gateway.

Furthermore, location information may be either communicated to the server or determined on the server side based on radio signal triangulation from the other devices in the LoRaWAN network.

The communication shown in Fig. 2 starts with activation of a relay **R1** in join procedure according to the LoRa Link Layer Specification in which the relay **R1** broadcasts relay Join-Request frame **201R.** The relay Join-Request frame **201R** is received by a gateway **G1** being in range and forwarded to the LoRaWAN Network Server **NS1.** In response the LoRaWAN Network Server **NS1** sends relay Join-Accept frame **201A,** to the gateway **G1** which forwards it downlink to the relay **R1.** Relay **R1** is configured to turn its receiver the delay **W1D** after relay Join-Request frame **201A** has been sent. The difference with respect to the LoRa Link Layer Specification is that the location information of the relay **R1** and that location information of end-device **ED1** is delivered by other means and stored in the networks server **NS1.**

Alternatively (not shown in Fig. 2) activation can be Activation By Personalization (ABP) as defined in LoRaWAN Link Layer Specification, in which location information is provided to LoRaWAN Network Server by other means than join request frame, e.g. manually or via other network. Upon installation of end-device **ED1, ED2, ED3, ED4, ED5, ED6, ED7, ED8,** its GPS coordinates or other location information is communicated via supplementary communication link to the LoRaWAN Network Server **NS1,** which stores it for future use. The same applies for location of the relay **R1.** Gateways **G1, G2, G3** often have their own GPS receivers, and are adapted to communicate it to the LoRaWAN Network Server **NS1.** Nevertheless, it is convenient to store their location also in the LoRaWAN Network Server for convenient use. The supplementary communication link may be other telecommunication network, wireless network, direct data connection or even voice link allowing the installing person to dictate the location to someone who enters it to the server. Typical choices include cellular communication (LTE) or WiFi via the mobile phone of the technician installing the device. The fastest, most reliable and convenient way is LTE network and mobile app.

Alternatively the additional communication link can be entirely avoided and the end-device may be adapted to communicate its location information via LoRaWAN network in one of the first frames sent.

Fig. 2 further shows an unsuccessful activation of an end-device **ED1.** The end-device **ED1** broadcasts end-device Join-Request frame **202R** and following data frames comprising location information (not indicated in figures). The end-device Join-Request frame **202R** is received by the gateway **G1** and forwarded to networks server (frame not shown in Fig. 2), which replies with end-device Join-Accept frame **202A** (not shown). The gateway **G1,** forwards the end-device Join-Accept frame **202A** to the end-device **ED1,** but the communication is unsuccessful as represented by "X" cross-out on the respective arrow in Fig. 2. When the end-device Join-Accept frame is not received within time window RX1 - communication loss **203** is noted.

As discussed later, the communication loss may be noted immediately or after certain number of unsuccessful attempts (not shown in Fig. 2), e.g. after predefined number maximum listening time **RX1.** Limitation conserves power of end-devices or relays when response is not coming or is lost.

On network-server **NS1** transmission from end-device ED1 is expected at random time within time WINDOW_SIZE that follows transmission time **2041** assigned to end-device **ED1.**

As shown further in Fig. 2, in a time slot that follows transmission time **2041** no communication from the endpoint device **ED1** is received. Accordingly the LoRaWAN Network Server **NS1** acknowledges that communication is missed **205.**

The LoRaWAN Network Server **NS1** waits for the next communication from the relay, which according to stored location information is in range of the end-point device **ED1.** It is communication **206** from relay **R1.** Relay Designation frame **207D** is sent from the LoRaWAN Network Server **NS1** via gateway **G1** to the relay **R1** to reach it in time window **RX1** following the communication **206** by delay **W1D.** The relay **R1** responds with Relay Designation Acknowledgement frame **207A** which is sent to the LoRaWAN Network Server **NS1** via the gateway **G1.**

The relay designation frame **207D** comprises serial number of the end-device **ED1** that needs a relay for successful transmission.

On the side of communication link the end node device **ED1** notes communication loss **203.** The communication loss is simply defined by expiration of wait time for response or - additionally - by maximal number of unsuccessful attempts to receive response. More complex conditions form particular circumstances may also be applicable.

After noting communication loss the end node device **ED1** is set to send Relay Join Request **208R** at the time offset and channel generated with Mersenne Twister function fed with the day of year and the serial number of the end-device **ED1.** Day of year and serial number are given only by way of example as two parameters, former of which is an absolute variable "known for both devices" and serial number is an example of fixed parameter identifying the end-device **ED1.**

Mersenne Twister function is known to be applicable in pseudorandom generators since 1998 as disclosed by Makoto Matsumoto and Takuji Nishimura in "Mersenne twister: a 623-dimensionally equidistributed uniform pseudo-random number generator", ACM Trans. Model. Comput. Simul. 8, 1 (Jan. 1998), 3-30. DOI:https://doi.org/10.1145/272991.272995. It has two main advantages: long repetition cycle and low numerical complexity, what contributes to energy saving in battery powered relay device. Mersenne Twister function computed for the same parameters on relay **R1** side and on end device **ED1** side returns the same number, yet distribution of numbers generated with time variant seed is indistinguishable from random and hence transmission at times computed with Mersenne Twister function is compatible with LoRaWAN standard.

Accordingly, communication between end-device **ED1** and relay **R1** started at time **2042** of transmission calculated with Mersenne Twister function is uniformly distributed in predefined time window and thus compatible with class A LoRaWAN specification - ALOHA-type protocol. However, use of pseudo random function with seed comprised of two parameters known to relay and to end-device still makes it possible to set up energy efficient communication without additional signals.

Seed for Mersenne Twister function is concatenation of serial number of the end-device **ED1** and objective e.g. time related value.

Person skilled in the art is able to suggest other function that can be used to obtain pseudo random generator and a number of applicable mechanism for seed generation. However, it is important to have one fixed parameter FP of seed identifying the end-device **ED1** and the other variable parameter VP which needs to be objectively determinable for both relay **R1** and end-device **ED1.** A number of days since beginning of the year is an example of applicable variable parameter VP as it varies and still can be determined on both sides despite possible deviation of clocks of devices. A serial number is an example of applicable fixed parameter FP. A person skilled in the art can easily suggest other applicable kinds of variable parameters and fixed parameters in transmission system. It is important however that the seed is specific for one on end-device and variable with time.

End-devices in the network transmit data at random times but in predetermined time windows to secure even distribution. Pseudo random generator is run a number of times corresponding to the number of transmission window calculated with given value of seed to return output value MT_OUT from range of (0,2³²-1). Output variable MT OUT is divided into two 16 bit variables MT_OUT_L and MT_OUT_H providing two output variables 16 each. MAX_RAND is constant value related to variable length and in this example equals 65536. MT_OUT is recalculated to time offset relative to predefined start of window assigned for possible transmission e.g. same hour every day with width of the assigned time window width: WINDOW_SIZE. Accordingly offset of transmission DELTA_T with respect to predetermined time is determined with formula: $DELTA_T = WINDOW_SIZE \frac{MT_OUT_H}{RAND_MAX}$

WINDOW_SIZE depends on the configuration of the network. Large networks comprise approximately 2500 devices set up for communication attempt twice daily. The communication drop is recognized if none of the two daily transmission is received successfully. Securing risk of communication drop below 2% requires use of the WINDOW_SIZE of approximately 10 000 seconds i.e. c.a. 3 hours, twice daily. On the other hand in small networks with just few devices even WINDOW_SIZE of 20s would be enough. Therefore applicable and reasonable time windows for use with Mersenne-Twister function vary from 20 to 10 000s.

Let us consider End-device ED1 having serial no set us fixed parameter FP=0xFA10, configured for sending a message in average every 12h i.e. twice daily at 6am and 6pm. Further let us consider 2^{nd} transmission in 5^{th} day of year VP=5 so on 5^{th} of January 6pm.

Time offset DELTA_T is determined with Mersenne Twister generator initiated with seed being a simple concatenation of FP and VP represented with two each: SEED=0xfa100005. Generator is run twice as this is 2^{nd} transmission for this seed. Result of generation is 3 248 757 446 (0xC1A41AC6). The output value is splitted into two 16 bit variables MT_OUT_L = 6854 (1AC6) and MT_OUT_H =49572 (C1A4). Time window assigned for transmission WINDOW_SIZE is 1 hour - 3600 s. The offset DELTA_T = 3600*6854 /65536 = 376 s. The value of DELTA_T is independently determined by **ED1** and relay **R1.** Accordingly end-device **ED1** starts second transmission on 5^{th} day of year at 18:06 and 18 seconds and relay **R1** listens accordingly. In fact relay **R1** turns on a receiver a little bit earlier to compensate possible clock deviations. The receiver is turned on for a time window **RXED1R, RXED1.**

Transmission channel number CHANNEL_NO is determined the same way as the time offset. For channel number selection MT OUT H random variable is used. The channel is calculated according to the formula: $CHANNEL_NO = \left.\left⌊TOTAL_CHANNELS\frac{MT_OUT_H}{RAND_MAX}\right⌋\right|$

In the given example if 2 channels are available (we will name them channel 0 and channel 1) the function will return 2*49572/65536 = 1. So the channel 1 will be used for transmission.

In this example Mersenne Twister pseudo-random number generator is fed with 32 bit seed being a simple concatenation of SERIAL_NBR and number of DAY. SEED = (SERIAL_NO≪16) +DAY The pseudo-random generator is run with this seed a number of time corresponding to the number of transmissions in a time unit (here: daily) to return a 32 digits number. Digits of 32 digits number are then split and used to generate 16-bit channel selector and 16-bit time offset. Naturally person skilled in the art can easily suggest other methods of using a random number to select two other values or to build seed from two parameters.

The LoRaWAN may define in a given region or jurisdiction one or more channels to be used specifically for transmission between the end devices and the relays. Alternatively channels used for conventional transmission may be applied - only with proper care to comply with random behavior required from the end-device.

The method of selection of the transmission time described within the invention may be used in the single-channel configuration, where the channel is pre-defined and does not need to be selected using a pseudo-random method and in such a case the value of MT_OUT_H is ignored.

In some particular areas network may designate only one channel allowed and available for relay transmission. In that case poll of channels for random selection is effectively 1 - and that reduces the system to deterministic behavior in terms of channel selection that configuration still works but obtaining the same probability of communication drop requires larger WINDOW_SIZE and that in turn might be disadvantageous if sensory data corresponding to more precise times are required to be transmitted.

The relay **R1** is set to listen for the Relay Join Request frame **208R** in the times **2042, 2043** with pseudorandom offsets and in channels computed with the same function on the relay **R1** side and on the end-device **ED1** side. The listening window **RXED1R** for the Relay Join Request frame might be wider than subsequent windows **RXED1** if the end-device **ED1** is known to be not synchronized for a long time. In particular together with the serial number of the end-device **ED1** a date of last time synchronization, and in absence thereof a date of production may be provided. Then it is possible to predict on the relay **R1** side, how wide the listening window should be. An applicable prediction method is disclosed in Michal Gorawski, Krzysztof Grochla, Rafal Marjasz, and Artur Frankiewicz. 2021. "Energy Minimization Algorithm for Estimation of Clock Skew and Reception Window Selection in Wireless Networks" *Sensors* 21, no. 5: 1768. https://doi.org/10.3390/s21051768. Upon receiving Relay Join Request 208R, the relay **R1** sends Relay Join Response **208A** to end-device **ED1**, forwards Relay Join Request frame **208R** to the LoRaWAN Network Server **NS1** via the gateway **G1** and the communication link is established.

Thereafter at times determined with offset computed with next run of Mersenne Twister function fed with the day of year and the serial number of the end-device is used for communication and the relay **R1**. Instead of listening continuously the relay **R1** turns receiver on only in time windows **RXED1R, RXED1** corresponding to predetermined times of transmission with time offsets computed with Mersenne Twister function and conventional time windows **RX1**.

In next predetermined time of transmission **2043** determined with time offset computed with Mersenne twister function, within window **RXED1,** data frame **209** is sent from the end-device **ED1** to the relay **R1** and confirmed with relay data acknowledgement frame **209RA** . Then the data frame **209** sent to LoRaWAN Network Server **NS1** via the gateway **G1.** Server responds with data acknowledgement **209A,** which is send back to the end-device **ED1** via the gateway **G1** and the relay **R1.** The relay **R1** receives the acknowledgement in **RX1** window which follows the sending of data frame **209** uplink. The data acknowledgement **209A** reaches the end-device **ED1** in time window **RX2.** Delayed with window delay WD2 with respect to the first transmission of data frame **209.**

In following transmissions the times of transmission are computed with offset calculated according to pseudo random function.

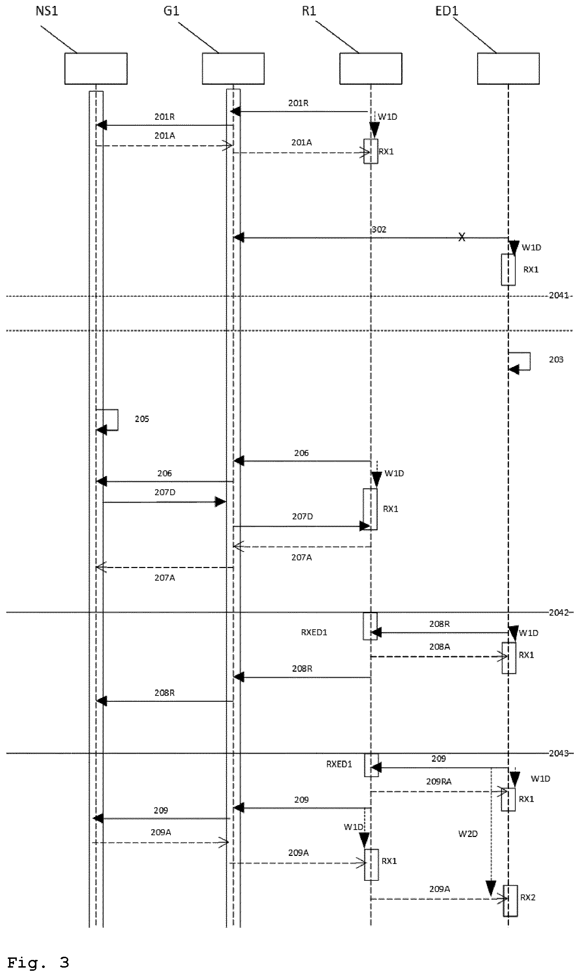

Fig. 3 shows a sequence of signals with end-device **ED1** being already activated and when data frame **302** is dropped. If it happens shortly before next transmission window - as in the scenario discussed above - the same sequence of signals follows.

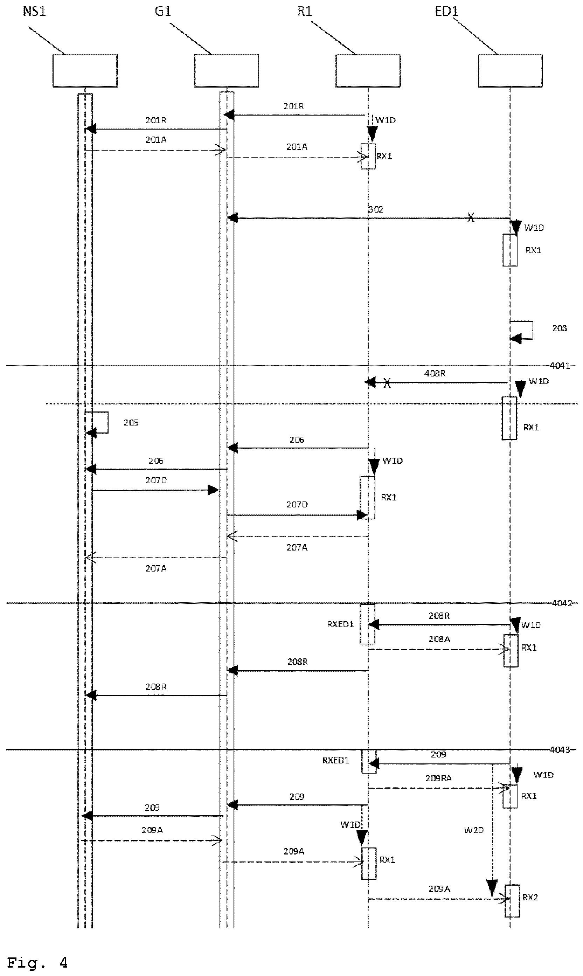

On the other hand, if data frame **208** is dropped longer before next transmission window, then the LoRaWAN Network Server may not have enough time to designate the relay. Such scenario is shown in Fig. 4. The Relay-Join-Request **408R** is not acknowledged as the relay has not been designated yet at time **4041.** The designation can only happen when loss of transmission is noted on the LoRaWAN network server **NS1** side.

In LoRaWAN packets are retransmitted if an acknowledgement is expected and is not received. **ED1** detects loss of link with the gateway **G1** when it does not receive acknowledgement of reception of data in time window **RX1** starting after predetermined time **WD1.** When loss of link is detected time of next transmission is calculated in a manner described above. The next transmission is Relay Join Request.

Simultaneously as data packet is not received loss of link is detected by the LoRaWAN Network Server **NS1.** It proceeds with relay designation to the relay **R1** selected according to location information of the end-device **ED1** and the location information of relay **R1.**

There is a risk that the end-device **ED1** and the LoRaWAN Network Server **NS1** may detect the loss of communication in different moments, in particular due to the optionality of using the packet acknowledgement in certain networks and certain circumstances. Nevertheless, the detection of loss of communication is possible in a few iterations. To address this risk, it is possible to adapt the link loss detection and force attempting transmission predetermined number of times before initiating relay mode. The relay itself may be conventional end-device but running computer program facilitating steps of the method described above with respect to relay **R1.** Alternatively, relay may be dedicated device with sole function and adaptation of working as intermediate device in transmission. Irrespectively of use the former or the later implementation the relay itself can be loaded with program instruction facilitating end-device steps of the method described above and therefore the transmission can take place via multiple relays.

End-devices, relays and gateways and servers in LoRaWAN have processing units and are programmable. Therefore methods according to the invention can be conveniently computer implemented with little or no hardware modification.

It is noted that convenient implementation of the method according to the invention is a set of computer program products executed on LoRaWAN Network Server, end-device and relay alterations in end-devices. End-devices can easily be adapted to be relays and to communicate in relayed communication. Thus multiple relaying is conveniently achievable.

Set of instructions responsible for steps of the method executed by the end-device and set of instruction responsible for steps of the method executed by the relay can be separate programs or can be aggregated in one universal program product.

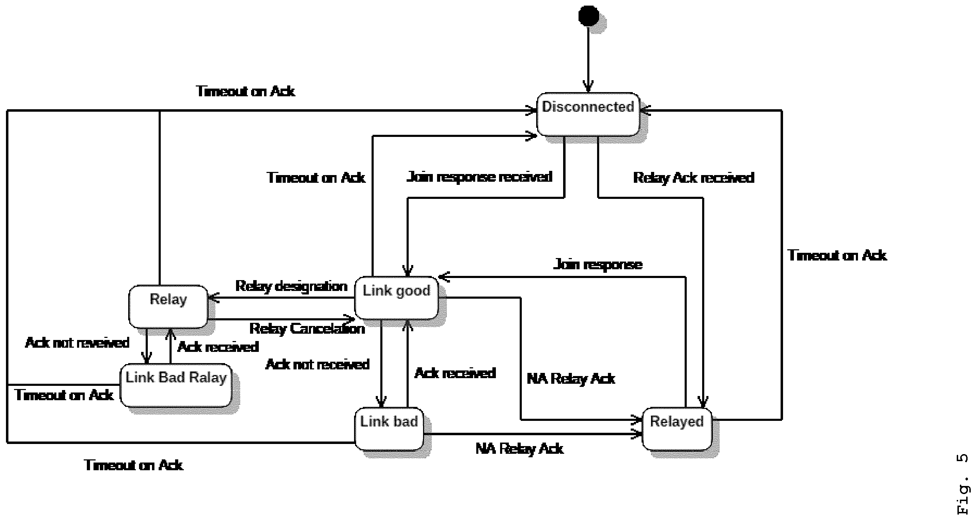

In an example of universal program product the computer program has limited number of allowable states shown in Fig. 5 with respect to the transmission form the relay/end-device:
- Disconnected: the device is unable to communicate and keeps sending join request frame.
- Link good - no interruptions in communication were observed by the device
- Link bad - the state precedes detection of loss of transmission. This state can be divided into multiple sub-states that are reached before loss of transmission is noted.
- Relayed - device received Relay Join Acknowledgement
- Link bad relay the state precedes detection of loss of relayed transmission. This state can be divided into multiple sub-states that are reached before loss of transmission is noted and state "disconnected" is achieved.
- Relayed - the transmission of data is relayed with other relay device
- Relay - the device serves as relay for other devices.

In more complex example not shown in Fig. 5 there is an additional state Relayed-Relay in which the device serves as relay and uses other relay.

Number of states determine number of attempts before loss of transmission is detected while length of timeouts determine how long acknowledgements are awaited.

The computer program product can be stored in solid state, or magnetic or optical memory as well as in random access memory or in distributed system.
Person skilled in the art having read the teachings of the present invention will easily see other beneficial variants and applications that lay in the scope of the invention as defined with attached claims In particular person skilled in the art will be able to propose numerous kinds and combination of parameters unique for end-device and variable parameters common to the end-device and other devices.

## Claims

1. A method of transmitting data in a LoRaWAN radio network having a LoRaWAN Network Server (**NS1**), at least one gateway (**G1**, **G2**, **G3**) at least one relay (**R1**) and at least one end-device (**ED1, ED2, ED3, ED4, ED5, ED6, ED7, ED8**),
the method comprising
a step of activation of the at least one end-device (ED1),
a step of activation of the at least one relay (R1), and a step of transmitting at least one data frame from the end-device (ED1), to the LoRaWAN Network Server (NS1), via the relay (R1) and the gateway (G1),
the at least one relay (R1) is battery powered,
and the method further comprises, prior to the step of transmitting the at least one data frame via the relay (R1) :
a step of storing location information of the at least one end-device (ED1) is executed by the LoRaWAN Network Server (NS1),
a step of storing location information of the at least one relay (R1) is executed by the LoRaWAN Network Server (NS1),
a step of detecting loss of communication (**203**) by the at least one end-device (**ED1**) by expiration of a wait time for a response or by a maximal number of unsuccessful attempts,
a step of detecting loss of communication by the LoRaWAN Network Server (**NS1**) when communication from the at least one end-device (**ED1**) is not received within a time window (**WINDOW_SIZE**) that follows a transmission time (**2041**) assigned to the end-device (**ED1**), and then
a step of designating the relay (**R1**) for relaying communication with the at least one end-device (**ED1**) by the LoRaWAN Network Server (**NS1**) based on the location information of the end-device (**ED1**) and the relay (**R1**), wherein the LoRaWAN Network Server (**NS1**) sends a relay designation frame (**207D**) comprising a fixed parameter unique for the end-device (**ED1**) to the relay (**R1**),
wherein the step of transmitting the at least one data frame from the end-device (**ED1**) to the LoRaWAN Network Server (**NS1**) via the relay (**R1**) and the gateway (**G1**) comprises:
a step of transmitting a data frame (**209**)
by the end-device (**ED1**)
to the relay (**R1**)
at frequency channels and at predetermined times with an offset selected with a pseudo random function fed with the fixed parameter unique for the end-device (**ED1**) and at least one variable parameter common for both the end-device (**ED1**) and the relay (**R1**), wherein the variable parameter is a time-related value determined by both the relay (**R1**) and the end- device (**ED1**),
a step of receiving the data frame (**209**)
by the relay (**R1**) listening in a predefined time window **(RXED1R, RXED1)** at the frequency channels and at the predetermined times with the offset selected with the pseudo random function fed with the fixed parameter unique for the end-device (**ED1**) and the variable parameter common for both the end-device (**ED1**) and the relay (**R1**), and
a step of sending the data frame (**209**) by the relay (**R1**) to the LoRaWAN Network Server (**NS1**) via the gateway (**G1**).

2. Method of transmitting data in a LoRaWAN radio network according to claim 1, wherein the loss of communication (**203**) is detected when activation of the end-device (**ED1**) is unsuccessful.

3. Method of transmitting data in a LoRaWAN radio network according to claim 1 or 2, wherein the loss of communication is detected when transmission of data from the end-device (**ED1**) is not received and/or not acknowledged.

4. Method according to claim 1, 2 or 3 wherein a frequency channel for relayed communication is selected with the pseudo random function fed with the fixed parameter unique for the end-device (**ED1**) and the variable parameter common for both the end-device (**ED1**) and the relay (**R1**).

5. Method according to claim 4, wherein the frequency channel is selected from a poll of at least eight channels dedicated for relaying.

6. Method according to claim 4, wherein the frequency channel is selected from a poll of at least eight channels dedicated for a conventional communication in the LoRaWAN network.

7. Method according to any of claims 1 to 6, wherein the pseudo random function is a Mersenne Twister function.

8. Method according to any of claims 1 to 7, wherein the relay (**R1**) is pre-designated for relaying communication with the specific end-device (**ED1**) upon its installation.

9. A relay for transmitting data in a LoRaWAN radio network having a LoRaWAN Network Server (**NS1**), at least one Gateway (**G1**), and at least one end-device (**ED1**), the relay being configured to:
receive a Relay Designation frame (**207D**) comprising a fixed parameter unique for the end-device (**ED1**) from the LoRaWAN Network Server (**NS1**),
receive a Relay Join Request (**208R**) from the end-device (**ED1**), and
communicate with the end-device (**ED1**) at frequency channels and predetermined times with offsets selected with a pseudo random function fed with the fixed parameter unique for the end-device (**ED1**) and a variable parameter common for both the end-device (**ED1**) and the relay (**R1**), wherein the variable parameter is a time-related value determined by both the relay (**R1**) and the end- device (**ED1**),
in response to being designated
by the LoRaWAN Network Server (**NS1**) based on the location information of the end-device (**ED1**) and
the relay (**R1**), for relaying communication with the at least one end-device (**ED1**) via the gateway (**G1**).

10. A computer program product for relaying transmission with a relay (**R1**) in a LoRaWAN radio network having a LoRaWAN Network Server (**NS1**), at least one Gateway (**G1**), and at least one end-device (**ED1**), comprising a set of instructions that when run by the relay (R1) cause it to receive a Relay Designation frame (207D) comprising a fixed parameter unique for the end-device (ED1) from the LoRaWAN Network Server (**NS1**),receive a Relay Join Request (**208R**) from the end-device (**ED1**), compute predetermined times with offsets selected with a pseudo random function fed with the fixed parameter unique for the end-device (**ED1**) and one variable parameter common for both end-device (**ED1**) and relay (**R1**), wherein the variable parameter is a time-related value determined by both the relay (**R1**) and the end- device (**ED1**),
communicate with end-device (**ED1**) at predetermined times with offsets and at frequency channels and via the gateway (**G1**),
in response to being designated by the LoRaWAN Network Server (**NS1**) based on
the location information of the end-device (**ED1**) and
the relay (**R1**).

11. An end-device (**ED1**) for a LoRaWAN radio network having a LoRaWAN Network Server (**NS1**), at least one Gateway (**G1**), and at least one relay (**R1**), the end-device being configured to:
detect loss of communication (**203**) by expiration of a wait time for a response or by a maximal number of unsuccessful attempts, send a relay Join Request (**208R**), and
communicate
via a relay (**R1**) designated
by the LoRaWAN Network Server (**NS1**) based on
the location information of the end-device (**ED1**) and
the relay (**R1**), for relaying communication with the end-device (**ED1**) to the LoRaWAN Network Server (**NS1**) via the gateway (**G1**),
at frequency channels and predetermined times with offsets selected with a pseudo random function fed with one fixed parameter unique for the end-device (**ED1**) and one variable parameter common for both the end-device (**ED1**) and the relay (**R1**), wherein the variable parameter is a time-related value determined by both the relay (**R1**) and the end-device (**ED1**).

12. A computer program product for transmitting data from an end-device (**ED1**) in a LoRaWAN radio network having a LoRaWAN Network Server (**NS1**), at least one Gateway (**G1**), and at least one relay (**R1**), comprising a set of instructions that when run by the end-device (**ED1**) cause it to:
detect loss of communication (**203**) by expiration of a wait time for a response or by a maximal number of unsuccessful attempts,
send a relay Join Request (**208R**), and
communicate
via a relay (**R1**) designated
by the LoRaWAN Network Server (**NS1**) based on
the location information of the end-device (**ED1**) and
the relay (**R1**), for relaying communication with the end-device (**ED1**) to the LoRaWAN Network Server (**NS1**) via the gateway (**G1**),
at frequency channels and predetermined times with offsets selected with a pseudo random function fed with one fixed parameter unique for the end-device (**ED1**) and one variable parameter common for both the end-device (**ED1**) and the relay (**R1**), wherein the variable parameter is a time-related value determined by both the relay (**R1**) and the end-device (**ED1**).

## Patentansprüche

1. Verfahren zum Übertragen von Daten in einem LoRaWAN-Funknetz,
das einen LoRaWAN-Netzwerkserver (**NS1**), zumindest ein Gateway (**G1**, **G2**, **G3**), zumindest ein Relais (**R1**) und zumindest ein Endgerät (**ED1**, **ED2**, **ED3**, **ED4**, **ED5**, **ED6**, **ED7**, **ED8**) aufweist,
wobei das Verfahren
einen Schritt der Aktivierung des zumindest einen Endgeräts (**ED1**),
einen Schritt der Aktivierung des zumindest einen Relais (**R1**) und einen Schritt des Übertragens zumindest eines Datenrahmens vom Endgerät (**ED1**) an den LoRaWAN-Netzwerkserver (**NS1**) über das Relais (**R1**) und das Gateway (**G1**) umfasst,
wobei das zumindest eine Relais (**R1**) batteriebetrieben ist,
und wobei das Verfahren vor dem Schritt des Übertragens des zumindest einen Datenrahmens über das Relais (**R1**) ferner umfasst:
einen Schritt des Speicherns von Standortinformationen des zumindest einen Endgeräts (**ED1**), der durch den LoRaWAN-Netzwerkserver (**NS1**) ausgeführt wird,
einen Schritt des Speicherns von Standortinformationen des zumindest einen Relais (**R1**), der durch den LoRaWAN-Netzwerkserver (**NS1**) ausgeführt wird,
einen Schritt des Erkennens eines Kommunikationsverlusts (**203**) durch das zumindest eine Endgerät (**ED1**) anhand des Ablaufs einer Wartezeit für eine Antwort oder anhand einer maximalen Anzahl erfolgloser Versuche,
einen Schritt des Erkennens eines Kommunikationsverlusts durch den LoRaWAN-Netzwerkserver (**NS1**), wenn innerhalb eines Zeitfensters (**WINDOW_SIZE**), das auf einen dem Endgerät (**ED1**) zugewiesenen Übertragungszeitpunkt (**2041**) folgt, keine Kommunikation von dem zumindest einen Endgerät (**ED1**) empfangen wird, und anschließend
einen Schritt des Zuweisens des Relais (**R1**) zur Weiterleitung der Kommunikation mit dem zumindest einen Endgerät (**ED1**) durch den LoRaWAN-Netzwerkserver (**NS1**) auf Grundlage der Standortinformationen des Endgeräts (**ED1**) und des Relais (**R1**), wobei der LoRaWAN-Netzwerkserver (**NS1**) einen Relaiszuweisungsrahmen (**207D**), der einen festen, für das Endgerät (**ED1**) eindeutigen Parameter umfasst, an das Relais (**R1**) sendet,
wobei der Schritt des Übertragens des zumindest einen Datenrahmens vom Endgerät (**ED1**) an den LoRaWAN-Netzwerkserver (**NS1**) über das Relais (**R1**) und das Gateway (**G1**) umfasst:
einen Schritt des Übertragens eines Datenrahmens (**209**)
durch das Endgerät (**ED1**)
an das Relais (**R1**)
auf Frequenzkanälen und zu vorbestimmten Zeitpunkten mit
einem Versatz, der mittels einer Pseudozufallsfunktion
ausgewählt wird, die mit
dem festen, für das Endgerät (**ED1**) eindeutigen Parameter und zumindest einem variablen Parameter gespeist wird, der sowohl dem Endgerät (**ED1**) als auch dem Relais (**R1**) gemeinsam ist, wobei der variable Parameter ein zeitbezogener Wert ist, der sowohl durch das Relais (**R1**) als auch durch das Endgerät (**ED1**) bestimmt wird,
einen Schritt des Empfangens des Datenrahmens (**209**)
durch das Relais (**R1**), das in einem vordefinierten Zeitfenster (**RXED1R**, **RXED1**) auf den Frequenzkanälen und zu den vorbestimmten Zeitpunkten mit dem Versatz auf Empfang ist, der mittels der Pseudozufallsfunktion ausgewählt wird, die mit dem festen, für das Endgerät (**ED1**) eindeutigen Parameter und dem variablen Parameter gespeist wird, der sowohl dem Endgerät (**ED1**) als auch dem Relais (**R1**) gemeinsam ist, und
einen Schritt des Sendens des Datenrahmens (**209**) durch das Relais (**R1**) an den LoRaWAN-Netzwerkserver (**NS1**) über das Gateway (**G1**).

2. Verfahren zum Übertragen von Daten in einem LoRaWAN-Funknetz nach Anspruch 1, wobei der Kommunikationsverlust (**203**) erkannt wird, wenn die Aktivierung des Endgeräts (**ED1**) erfolglos ist.

3. Verfahren zum Übertragen von Daten in einem LoRaWAN-Funknetz nach Anspruch 1 oder 2, wobei der Kommunikationsverlust erkannt wird, wenn die Übertragung von Daten vom Endgerät (**ED1**) nicht empfangen und/oder nicht bestätigt wird.

4. Verfahren nach Anspruch 1, 2 oder 3, wobei ein Frequenzkanal für weitergeleitete Kommunikation mittels der Pseudozufallsfunktion ausgewählt wird, die mit dem festen, für das Endgerät (**ED1**) eindeutigen Parameter und dem variablen Parameter gespeist wird, der sowohl dem Endgerät (**ED1**) als auch dem Relais (**R1**) gemeinsam ist.

5. Verfahren nach Anspruch 4, wobei der Frequenzkanal aus einem Pool von zumindest acht für die Weiterleitung dedizierten Kanälen ausgewählt wird.

6. Verfahren nach Anspruch 4, wobei der Frequenzkanal aus einem Pool von zumindest acht für eine herkömmliche Kommunikation im LoRaWAN-Netz dedizierten Kanälen ausgewählt wird.

7. Verfahren nach einem der Ansprüche 1 bis 6, wobei die Pseudozufallsfunktion eine Mersenne-Twister-Funktion ist.

8. Verfahren nach einem der Ansprüche 1 bis 7, wobei das Relais (**R1**) zur Weiterleitung der Kommunikation mit dem spezifischen Endgerät (**ED1**) bei seiner Installation vorab zugewiesen wird.

9. Relais zum Übertragen von Daten in einem LoRaWAN-Funknetz, das einen LoRaWAN-Netzwerkserver (**NS1**), zumindest ein Gateway (**G1**) und zumindest ein Endgerät (**ED1**) aufweist, wobei das Relais dazu konfiguriert ist:
einen Relaiszuweisungsrahmen (**207D**), der einen festen, für das Endgerät (**ED1**) eindeutigen Parameter umfasst, vom LoRaWAN-Netzwerkserver (**NS1**) zu empfangen,
eine Relaisbeitrittsanfrage (**208R**) vom Endgerät (**ED1**) zu empfangen und
mit dem Endgerät (**ED1**) auf Frequenzkanälen und zu vorbestimmten Zeitpunkten mit Versätzen zu kommunizieren, die mittels einer Pseudozufallsfunktion ausgewählt werden, die mit dem festen, für das Endgerät (**ED1**) eindeutigen Parameter und einem variablen Parameter gespeist wird, der sowohl dem Endgerät (**ED1**) als auch dem Relais (**R1**) gemeinsam ist, wobei der variable Parameter ein zeitbezogener Wert ist, der sowohl durch das Relais (**R1**) als auch durch das Endgerät (**ED1**) bestimmt wird,
als Reaktion darauf, dass es
durch den LoRaWAN-Netzwerkserver (**NS1**) auf Grundlage der Standortinformationen des Endgeräts (**ED1**) und
des Relais (**R1**) zur Weiterleitung der Kommunikation mit dem zumindest einen Endgerät (**ED1**) über das Gateway (**G1**) zugewiesen wird.

10. Computerprogrammprodukt zum Weiterleiten einer Übertragung mit einem Relais (**R1**) in einem LoRaWAN-Funknetz, das einen LoRaWAN-Netzwerkserver (**NS1**), zumindest ein Gateway (**G1**) und zumindest ein Endgerät (**ED1**) aufweist, umfassend einen Satz von Anweisungen, die bei Ausführung durch das Relais (**R1**) dieses veranlassen,
einen Relaiszuweisungsrahmen (**207D**), der einen festen, für das Endgerät (**ED1**) eindeutigen Parameter umfasst, vom LoRaWAN-Netzwerkserver (**NS1**) zu empfangen, eine Relaisbeitrittsanfrage (**208R**) vom Endgerät (**ED1**) zu empfangen, vorbestimmte Zeitpunkte mit Versätzen zu berechnen, die mittels einer Pseudozufallsfunktion ausgewählt werden, die mit dem festen, für das Endgerät (**ED1**) eindeutigen Parameter und einem variablen Parameter gespeist wird, der sowohl dem Endgerät (**ED1**) als auch dem Relais (**R1**) gemeinsam ist, wobei der variable Parameter ein zeitbezogener Wert ist, der sowohl durch das Relais (**R1**) als auch durch das Endgerät (**ED1**) bestimmt wird,
mit dem Endgerät (**ED1**) zu vorbestimmten Zeitpunkten mit Versätzen und auf Frequenzkanälen und über das Gateway (**G1**) zu kommunizieren,
als Reaktion darauf, dass es
durch den LoRaWAN-Netzwerkserver (**NS1**) auf Grundlage der Standortinformationen des Endgeräts (**ED1**) und des Relais (**R1**) zugewiesen wird.

11. Endgerät (**ED1**) für ein LoRaWAN-Funknetz, das einen LoRaWAN-Netzwerkserver (**NS1**), zumindest ein Gateway (**G1**) und zumindest ein Relais (**R1**) aufweist, wobei das Endgerät dazu konfiguriert ist:
einen Kommunikationsverlust (**203**) anhand des Ablaufs einer
Wartezeit für eine Antwort oder anhand einer maximalen Anzahl erfolgloser Versuche zu erkennen, eine Relaisbeitrittsanfrage (**208R**) zu senden und
über ein Relais (**R1**), das
durch den LoRaWAN-Netzwerkserver (**NS1**) auf Grundlage der Standortinformationen des Endgeräts (**ED1**) und
des Relais (**R1**) zur Weiterleitung der Kommunikation mit dem Endgerät (**ED1**) an den LoRaWAN-Netzwerkserver (**NS1**) über das Gateway (**G1**) zugewiesen ist,
auf Frequenzkanälen und zu vorbestimmten Zeitpunkten mit Versätzen zu kommunizieren, die mittels einer Pseudozufallsfunktion ausgewählt werden, die mit einem festen, für das Endgerät (**ED1**) eindeutigen Parameter und einem variablen Parameter gespeist wird, der sowohl dem Endgerät (**ED1**) als auch dem Relais (**R1**) gemeinsam ist, wobei der variable Parameter ein zeitbezogener Wert ist, der sowohl durch das Relais (**R1**) als auch durch das Endgerät (**ED1**) bestimmt wird.

12. Computerprogrammprodukt zum Übertragen von Daten von einem Endgerät (**ED1**) in einem LoRaWAN-Funknetz, das einen LoRaWAN-Netzwerkserver (**NS1**), zumindest ein Gateway (**G1**) und zumindest ein Relais (**R1**) aufweist, umfassend einen Satz von Anweisungen, die bei Ausführung durch das Endgerät (**ED1**) dieses veranlassen: einen Kommunikationsverlust (**203**) anhand des Ablaufs einer Wartezeit für eine Antwort oder anhand einer maximalen Anzahl erfolgloser Versuche zu erkennen,
eine Relaisbeitrittsanfrage (**208R**) zu senden und
über ein Relais (**R1**), das
durch den LoRaWAN-Netzwerkserver (**NS1**) auf Grundlage der Standortinformationen des Endgeräts (**ED1**) und
des Relais (**R1**) zur Weiterleitung der Kommunikation mit dem Endgerät (**ED1**) an den LoRaWAN-Netzwerkserver (**NS1**) über das Gateway (**G1**) zugewiesen ist,
auf Frequenzkanälen und zu vorbestimmten Zeitpunkten mit Versätzen zu kommunizieren, die mittels einer Pseudozufallsfunktion ausgewählt werden, die mit einem festen, für das Endgerät (**ED1**) eindeutigen Parameter und einem variablen Parameter gespeist wird, der sowohl dem Endgerät (**ED1**) als auch dem Relais (**R1**) gemeinsam ist, wobei der variable Parameter ein zeitbezogener Wert ist, der sowohl durch das Relais (**R1**) als auch durch das Endgerät (**ED1**) bestimmt wird.

## Revendications

1. Procédé de transmission de données dans un réseau radio LoRaWAN incluant un serveur de réseau LoRaWAN (NS1), au moins une passerelle
(G1, G2, G3), au moins un relais (R1) et au moins un dispositif d'extrémité (ED1, ED2, ED3, ED4, ED5, ED6, ED7, ED8),
le procédé comprenant
une étape d'activation de l'au moins un dispositif d'extrémité (ED1),
une étape d'activation de l'au moins un relais (R1), et une étape de transmission d'au moins une trame de données à partir du dispositif d'extrémité (ED1), à destination du serveur de réseau LoRaWAN (NS1), via le relais (R1) et la passerelle (G1),
l'au moins un relais (R1) est alimenté par batterie,
et le procédé comprend en outre, avant l'étape de transmission de l'au moins une trame de données via le relais (R1) :
une étape de stockage d'informations de localisation de l'au moins un dispositif d'extrémité (ED1) est exécutée par le serveur de réseau LoRaWAN (NS1),
une étape de stockage d'informations de localisation de l'au moins un relais (R1) est exécutée par le serveur de réseau LoRaWAN (NS1),
une étape de détection de perte de communication (203) par l'au moins un dispositif d'extrémité (ED1) à l'expiration d'un temps d'attente de réponse ou après un nombre maximal de tentatives infructueuses,
une étape de détection de perte de communication par le serveur de réseau LoRaWAN (NS1) lorsque la communication en provenance de l'au moins un dispositif d'extrémité (ED1) n'est pas reçue dans une fenêtre temporelle (WINDOW_SIZE) qui suit un temps de transmission (2041) assigné au dispositif d'extrémité (ED1), puis
une étape de désignation du relais (R1) pour relayer la communication avec l'au moins un dispositif d'extrémité (ED1) par le serveur de réseau LoRaWAN (NS1) sur la base des informations de localisation du dispositif d'extrémité (ED1) et du relais (R1), dans lequel le serveur de réseau LoRaWAN (NS1) envoie une trame de désignation de relais (207D) comprenant un paramètre fixe unique pour le dispositif d'extrémité (ED1) à destination du relais (R1),
dans lequel l'étape de transmission de l'au moins une trame de données à partir du dispositif d'extrémité (ED1) à destination du serveur de réseau LoRaWAN (NS1) via le relais (R1) et la passerelle (G1) comprend :
une étape de transmission d'une trame de données (209)
par le dispositif d'extrémité (ED1)
à destination du relais (R1)
sur des canaux de fréquences et à des instants prédéterminés
avec un décalage sélectionné avec
une fonction pseudo-aléatoire alimentée avec le paramètre fixe unique pour le dispositif d'extrémité (ED1) et au moins un paramètre variable commun à la fois pour le dispositif d'extrémité (ED1) et le relais (R1), dans lequel le paramètre variable est une valeur temporelle déterminée à la fois par le relais (R1) et le dispositif d'extrémité (ED1),
une étape de réception de la trame de données (209) par le relais (R1) écoutant, pendant une fenêtre temporelle prédéfinie (RXED1R, RXED1), sur les canaux de fréquences et aux instants prédéterminés avec le décalage sélectionné avec la fonction pseudo-aléatoire alimentée avec le paramètre fixe unique pour le dispositif d'extrémité (ED1) et le paramètre variable commun à la fois pour le dispositif d'extrémité (ED1) et le relais (R1), et
une étape d'envoi de la trame de données (209) par le relais (R1) à destination du serveur de réseau LoRaWAN (NS1) via la passerelle (G1).

2. Procédé de transmission de données dans un réseau radio LoRaWAN selon la revendication 1, dans lequel la perte de communication (203) est détectée lorsque l'activation du dispositif d'extrémité (ED1) échoue.

3. Procédé de transmission de données dans un réseau radio LoRaWAN selon la revendication 1 ou 2, dans lequel la perte de communication est détectée lorsque la transmission de données à partir du dispositif d'extrémité (ED1) n'est pas reçue et/ou n'est pas accusée en réception.

4. Procédé selon la revendication 1, 2 ou 3, dans lequel un canal de fréquences pour la communication relayée est sélectionné avec une fonction pseudo-aléatoire alimentée avec le paramètre fixe unique pour le dispositif d'extrémité (ED1) et le paramètre variable commun à la fois pour le dispositif d'extrémité (ED1) et le relais (R1).

5. Procédé selon la revendication 4, dans lequel le canal de fréquences est sélectionné par tirage parmi au moins huit canaux dédiés au relais.

6. Procédé selon la revendication 4, dans lequel le canal de fréquences est sélectionné par tirage parmi au moins huit canaux dédiés à une communication conventionnelle dans le réseau LoRaWAN.

7. Procédé selon l'une des revendications 1 à 6, dans lequel la fonction pseudo-aléatoire est une fonction Mersenne Twister.

8. Procédé selon l'une des revendications 1 à 7, dans lequel le relais (R1) est pré-désigné pour relayer la communication avec le dispositif d'extrémité spécifique (ED1) lors de son installation.

9. Relais pour la transmission de données dans un réseau radio LoRaWAN présentant un serveur de réseau LoRaWAN (NS1), au moins une passerelle (G1) et au moins un dispositif d'extrémité (ED1), le relais étant configuré pour :
recevoir une trame de désignation de relais (207D) comprenant un paramètre fixe unique pour le dispositif d'extrémité (ED1) en provenance du serveur de réseau LoRaWAN (NS1),
recevoir une demande d'adhésion de relais (208R) en provenance du dispositif d'extrémité (ED1), et
communiquer avec le dispositif d'extrémité (ED1) sur des canaux de fréquences et à des instants prédéterminés avec des décalages sélectionnés avec une fonction pseudo-aléatoire alimentée avec le paramètre fixe unique pour le dispositif d'extrémité (ED1) et un paramètre variable commun à la fois pour le dispositif d'extrémité (ED1) et le relais (R1), dans lequel le paramètre variable est une valeur temporelle déterminée à la fois par le relais (R1) et le dispositif d'extrémité (ED1),
en réponse à sa désignation par le serveur de réseau LoRaWAN (NS1) sur la base des informations de localisation du dispositif d'extrémité (ED1) et
du relais (R1), pour relayer la communication avec l'au moins un dispositif d'extrémité (ED1) via la passerelle (G1).

10. Produit de programme informatique pour relayer une transmission avec un relais (R1) dans un réseau radio LoRaWAN présentant un serveur de réseau LoRaWAN (NS1), au moins une passerelle (G1) et au moins un dispositif d'extrémité (ED1), comprenant un ensemble d'instructions qui, lorsqu'elles sont exécutées par le relais (R1), amènent celui-ci à :
recevoir une trame de désignation de relais (207D) comprenant un paramètre fixe unique pour le dispositif d'extrémité (ED1) en provenance du serveur de réseau LoRaWAN (NS1), recevoir une demande d'adhésion de relais (208R) en provenance du dispositif d'extrémité (ED1), calculer des instants prédéterminés avec des décalages sélectionnés avec une fonction pseudo-aléatoire alimentée avec le paramètre fixe unique pour le dispositif d'extrémité (ED1) et un paramètre variable commun à la fois pour le dispositif d'extrémité (ED1) et le relais (R1), dans lequel le paramètre variable est une valeur temporelle déterminée à la fois par le relais (R1) et le dispositif d'extrémité (ED1),
communiquer avec le dispositif d'extrémité (ED1) aux instants prédéterminés avec des décalages, sur les canaux de fréquences et via la passerelle (G1),
en réponse à sa désignation par le serveur de réseau LoRaWAN (NS1) sur la base des informations de localisation du dispositif d'extrémité (ED1) et du relais (R1).

11. Dispositif d'extrémité (ED1) pour un réseau radio LoRaWAN présentant un serveur de réseau LoRaWAN (NS1), au moins une passerelle (G1) et au moins un relais (R1), le dispositif d'extrémité étant configuré pour :
détecter une perte de communication (203) à l'expiration d'un temps d'attente d'une réponse ou après un nombre maximal de tentatives infructueuses, envoyer une demande d'adhésion de relais (208R), et
communiquer
via un relais (R1) désigné
par le serveur de réseau LoRaWAN (NS1) sur la base
des informations de localisation du dispositif d'extrémité (ED1) et
du relais (R1), pour relayer la communication avec le dispositif d'extrémité (ED1) à destination du serveur de réseau LoRaWAN (NS1) via la passerelle (G1),
sur des canaux de fréquences et à des instants prédéterminés avec des décalages sélectionnés avec une fonction pseudo-aléatoire alimentée avec un paramètre fixe unique pour le dispositif d'extrémité (ED1) et un paramètre variable commun à la fois pour le dispositif d'extrémité (ED1) et le relais (R1), dans lequel le paramètre variable est une valeur temporelle déterminée à la fois par le relais (R1) et le dispositif d'extrémité (ED1).

12. Produit de programme informatique pour transmettre des données à partir d'un dispositif d'extrémité (ED1) dans un réseau radio LoRaWAN présentant un serveur de réseau LoRaWAN (NS1), au moins une passerelle (G1) et au moins un relais (R1), comprenant un ensemble d'instructions qui, lorsqu'elles sont exécutées par le dispositif d'extrémité (ED1), amènent celui-ci à :
détecter une perte de communication (203) à l'expiration d'un temps d'attente d'une réponse ou après un nombre maximal de tentatives infructueuses,
envoyer une demande d'adhésion de relais (208R), et communiquer
via un relais (R1) désigné
par le serveur de réseau LoRaWAN (NS1) sur la base
des informations de localisation du dispositif d'extrémité (ED1) et
du relais (R1), pour relayer la communication avec le dispositif d'extrémité (ED1) à destination du serveur de réseau LoRaWAN (NS1) via la passerelle (G1),
sur des canaux de fréquences et à des instants prédéterminés avec des décalages sélectionnés avec une fonction pseudo-aléatoire alimentée avec un paramètre fixe unique pour le dispositif d'extrémité (ED1) et un paramètre variable commun à la fois pour le dispositif d'extrémité (ED1) et le relais (R1), dans lequel le paramètre variable est une valeur temporelle déterminée à la fois par le relais (R1) et le dispositif d'extrémité (ED1).
